# FASCICULE DE BREVET EUROPEEN

(11) **EP 3 877 628 B1**
(45) Date de publication et mention de la délivrance du brevet: **28.12.2022**
(21) Numéro de dépôt: 19818233.9
(22) Date de dépôt: 08.11.2019
(51) Int. Cl.: F01D 5/28, F01D 9/04

(54) **ENSEMBLE DE REDRESSEUR DE FLUX COMPRENANT UNE PLATINE DE CENTRAGE ET DE FIXATION**
LEITSHCAUFELANORDNUNG MIT EINER PLATTE ZUR ZENTRIERUNG UND BEFESTIGUNG
VANE ASSEMBLY COMPRISING A PLATE FOR CENTERING AND FASTENING

(30) Priorité: 09.11.2018 FR 1860376
(43) Date de publication de la demande: 15.09.2021
(73) Titulaire: SAFRAN AIRCRAFT ENGINES, 75015 Paris (FR)
(72) Inventeur: BOISSON, Alexandre Bernard Marie, 77550 MOISSY-CRAMAYEL (FR); ORIEUX, Kaëlig Merwen, 77550 MOISSY-CRAMAYEL (FR)
(74) Mandataire: Regimbeau
(86) Numéro de dépôt international: PCT/FR2019/052666
(87) Numéro de publication internationale: WO 2020/095002

(56) Documents cités:
- EP-A2- 2 412 931
- US-A1- 2015 064 000
- US-A1- 2018 156 237

## Description

### DOMAINE DE L'INVENTION ET ETAT DE LA TECHNIQUE

L'invention se rapporte au domaine des aubes de turbomachine.

Une turbomachine comprend classiquement un compresseur, une chambre de combustion et une turbine. Le rôle du compresseur est d'accroître la pression de l'air fournie à la chambre de combustion. Le rôle de la turbine est d'assurer l'entrainement en rotation du compresseur en prélevant une partie de l'énergie de pression des gaz chauds sortant de la chambre de combustion et en la transformant en énergie mécanique.

Une turbomachine peut être du type « à double flux » c'est-à-dire qu'elle est traversée par deux flux d'air, un flux primaire et un flux secondaire. Le flux primaire est produit par des éléments constitutifs d'une turbomachine simple flux auxquels une ou plusieurs turbines supplémentaires sont ajoutées afin d'entraîner un étage de compression, le module de soufflante. Ce module de soufflante comprend une soufflante, celle-ci est équipée d'aubes de grande dimension, les aubes de soufflante produisant le flux secondaire. La soufflante augmente faiblement la pression des gaz la traversant, mais comme son diamètre est grand, l'énergie produite pour la poussée est élevée. Le module de soufflante comprend également une grille de redressement de flux positionnée derrière la soufflante pour redresser le flux d'air provenant de la soufflante.

La tendance actuelle concernant les moteurs d'aéronefs civils vise à réduire la consommation spécifique, la pollution sonore et les émissions d'oxydes d'azote (Nox). Une des solutions techniques adoptée par les motoristes, consiste à augmenter le taux de dilution entre le flux primaire et le flux secondaire. A ce titre, une architecture comme les moteurs UHBR (Ultra High Bypass Ratio) est envisagée en remplacement potentiel des turbomachines actuelles pour les vols moyens courriers.

Les diamètres de la soufflante et de la grille de redressement de flux (dite OGV) se trouvent alors largement augmentés, et les contraintes notamment liées au transport des pièces imposent un montage modulaire du module de soufflante sur le moyeu. En d'autres termes, les dimensions des pièces imposent un montage modulaire du secondaire sur le primaire.

Or, lors d'un montage modulaire, la mise en position du module de soufflante est réalisée par le redresseur. Dans ces conditions, le redresseur doit être correctement centré sur le moyeu.

Cependant, on utilise aujourd'hui des redresseurs en matériaux composites, car ces matériaux présentent d'excellentes performance mécanique pour une masse nettement inférieure au métal.

Or, l'utilisation d'un redresseur en matériau composite implique sa fixation radiale sur le moyeu et une virole de carter intermédiaire, pour en garantir la tenue mécanique. Pour réaliser la mise en position du module de soufflante dans le cadre du montage modulaire, le redresseur a alors besoin d'un dispositif de centrage (portée conique, butée axiale, etc.).

Par exemple, une solution connue du document EP 2412931 consiste à assurer le positionnement du redresseur en utilisant une liaison de type queued'aronde. Ainsi, un pied d'aube est vissé au moyeu, et la pale est liée au pied d'aube par une liaison de type queue-d'aronde. Cette liaison permet d'assurer le positionnement précis de la pale.

Cette disposition demeure complexe car d'une part la queue-d'aronde est couteuse et compliquée à fabriquer avec un redresseur en composite. D'autre part, l'assemblage est complexe à mettre en oeuvre. De façon générale, l'utilisation d'un dispositif de centrage n'est pas souhaitable dans le cas d'un redresseur en matériau composite, car il se révèle couteux à mettre en œuvre et non viable mécaniquement.

### PRESENTATION GENERALE DE L'INVENTION

Dans ce contexte, la présente invention a pour objectif de fournir un ensemble de redresseur dans lequel la fixation et le positionnement du redresseur sont assurés de manière simple et robuste.

Selon un premier aspect, l'invention concerne un ensemble de redresseur de flux pour un module de soufflante d'une turbomachine. L'ensemble de redresseur comprend une pluralité d'aubes réparties autour d'un axe de révolution de l'ensemble de redresseur. Chaque aube est en matériau composite et présente une pale et un pied destiné à être assemblé à un moyeu de la turbomachine. L'ensemble comprend une platine de centrage et de fixation sur la turbomachine destinée à être fixée d'une part au moyeu à une position azimutale déterminée et d'autre part au pied de l'une des aubes. La platine est adaptée pour être vissée au moyeu par des vis s'étendant longitudinalement par rapport à l'axe de révolution de l'ensemble et vissée au pied par des vis s'étendant radialement par rapport à l'axe de révolution de l'ensemble.

D'une manière particulièrement avantageuse, l'utilisation d'une platine comme organe de centrage et de fixation, distinct de l'aube et du moyeu permet de simplifier le montage de l'ensemble redresseur de flux. La double fonction de la platine permet de s'affranchir de solutions complexes telles que les queues-d'aronde. En effet, la platine est fixée à l'aube puis positionnée précisément sur le moyeu. La position de la platine ainsi que sa géométrie étant connues et précises, il en résulte que la fixation de l'aube sur la platine garantit un positionnement précis de l'aube. Ainsi, l'aube peut être positionnée précisément sur la platine et peut y être fixée simplement. En outre, la fixation de la platine sur le moyeu avec des vis longitudinales et la fixation de la platine au pied d'aube avec des vis radiales permet la bonne transmission des efforts mécaniques du moyeu vers l'aube. Ainsi, les efforts mécaniques peuvent circuler dans la platine, sans s'y accumuler. En d'autres termes, cette fixation permet de prévenir certaines concentrations de contraintes dans la platine et donc permet d'augmenter sa durée de vie.

L'invention propose donc un ensemble de redresseur dans lequel la fixation et le positionnement du redresseur sont assurés de manière simple et robuste.

La platine peut présenter une section radiale choisie parmi une forme sensiblement en L, ou en S, ou triangulaire.

Le pied peut être fixé au moyeu uniquement via la platine.

L'aube peut présenter une portion d'attaque et une portion de fuite, la portion d'attaque du pied étant fixé directement au moyeu et la portion de fuite du pied étant fixée au moyeu via la platine.

La platine peut être en métal.

Une plateforme peut être positionnée entre le pied et la pale, la plateforme présentant une section radiale conique ayant une fonction de déflecteur d'un flux d'air.

La plateforme peut être monobloc avec la pale.

La plateforme peut être un élément distinct de la pale, fixé à la pale.

Selon un deuxième aspect, l'invention concerne une turbomachine comprenant un ensemble de redresseur de flux pour un module de soufflante comprenant au moins une aube présentant une pale et un pied fixé à un moyeu de la turbomachine, et un organe de centrage et de fixation de l'aube sur la turbomachine fixé d'une part au moyeu à une position azimutale déterminée et d'autre part au pied d'aube.

Selon un troisième aspect, l'invention concerne un procédé d'assemblage d'un ensemble de redresseur de flux d'un module de soufflante à un moyeu d'une turbomachine comprenant les étapes suivantes :
- fixation, d'une platine à une aube de redresseur de flux,
- fixation, sur le moyeu, de la platine fixée à une aube, à une position azimutale déterminée.

### DESCRIPTION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique en coupe d'un ensemble de redresseur selon un premier mode de réalisation de l'invention ;
- la figure 2 est une représentation schématique en coupe d'un ensemble de redresseur selon un deuxième mode de réalisation de l'invention ;
- La figure 3 est une vue en perspective de dessus d'un organe de centrage et de fixation selon le deuxième mode de réalisation ;
- La figure 4 est une vue en perspective de dessous d'un organe de centrage et de fixation selon le deuxième mode de réalisation ;
- La figure 5 est une vue partielle en perspective d'un ensemble de redresseur selon le deuxième mode de réalisation.
- la figure 6 est une représentation schématique en coupe d'un ensemble de redresseur selon un troisième mode de réalisation de l'invention ;
- la figure 7 est une représentation schématique en coupe d'un ensemble de redresseur selon un quatrième mode de réalisation de l'invention ;
- La figure 8 est une vue en perspective de dessus d'un organe de centrage et de fixation selon le quatrième mode de réalisation ;
- La figure 9 est une vue en perspective de dessous d'un organe de centrage et de fixation selon le quatrième mode de réalisation ;
- La figure 10 est une vue partielle en perspective d'un ensemble de redresseur selon le quatrième mode de réalisation.

### DESCRIPTION DETAILLEE DE L'INVENTION

### Architecture générale

L'invention concerne un ensemble 1 de redresseur de flux pour un module de soufflante d'une turbomachine comprenant une pluralité d'aubes 2 réparties autour d'un axe de révolution. Chaque aube 2 est en matériau composite et présente une pale 21 et un pied 22 destiné à être assemblée à un moyeu 4 de la turbomachine. De plus, l'ensemble 1 comprend une platine 3 fixée d'une part au moyeu 4 à une position azimutale déterminée et d'autre part à l'aube 2. Il est précisé que par « position azimutale déterminée », on entend une position précise, choisie, sur le moyeu 4. Le moyeu peut être modélisé dans un repère cylindrique, la position azimutale est définie par un secteur (i. e une position) angulaire et une position par rapport à l'axe longitudinal du moyeu 4.

Ainsi, tel que cela sera décrit ci-après, dans le cadre d'un assemblage modulaire, les platines 3 sont préalablement fixés aux aubes 2 puis au moyeu 4. La juste position des aubes 2 étant garantie par le juste positionnement de chaque platine 3.

On rappelle que, dans le présent document, par fixé, il est entendu que les pièces sont solidaires, dans une liaison mécanique normalisée de type encastrement.

De plus, on précise que dans le présent document, par axe longitudinal, il est entendu un axe parallèle à l'axe de révolution de l'ensemble de redresseur et donc un axe de rotation de l'aube 2. De même, par axe radial, il est entendu un axe perpendiculaire l'axe de révolution de l'ensemble de redresseur et donc un axe de rotation de l'aube 2.

### Aube de redresseur

L'aube 2 de redresseur comprend principalement une pale 21 et au moins un pied 22. La pale 21 présente un bord d'attaque et un bord de fuite. D'une manière conventionnelle, on appelle portion d'attaque 22a une portion du pied 22 à l'aplomb du bord d'attaque de la pale 21 et portion de fuite 22b une portion du pied 22 à l'aplomb du bord de fuite de la pale 21.

D'une manière connue, la pale 21 présente une géométrie adaptée pour redresser un flux d'air issu d'une soufflante positionnée en amont.

Le pied 22 peut être conforme aux géométries connues (i.e. on peut utiliser des aubes 2 conventionnelles). Ainsi, le pied 22 peut être continu de la portion de bord d'attaque 22a à la portion de bord de fuite 22b, ou peut être ajouré entre la portion de bord d'attaque 22a et la portion de bord de fuite 22b. De même, d'une manière traditionnelle, le pied 22 peut être adaptée pour être fixé par des moyens de fixations uniquement selon un axe radial.

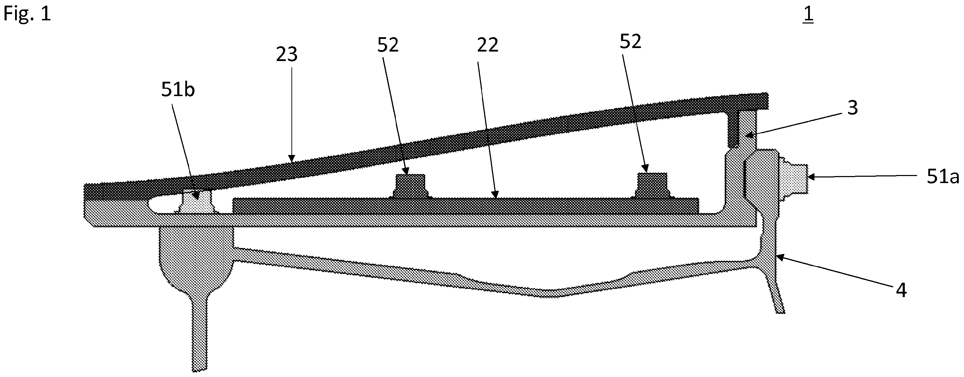

Selon un premier mode de réalisation présenté en figure 1, le pied 22 présente une section radiale sensiblement plane.

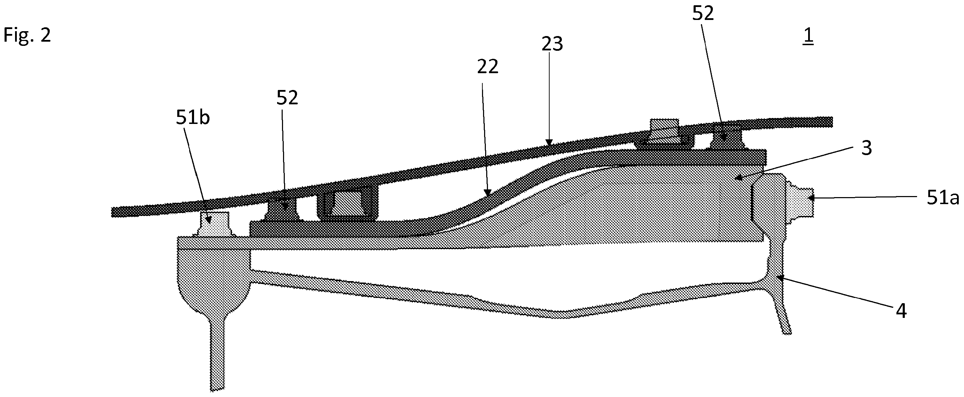

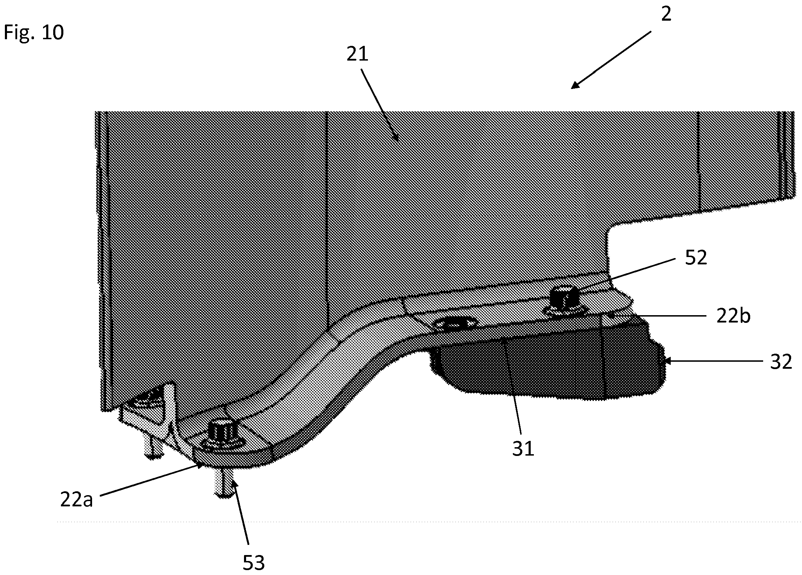

Selon les modes de réalisation présentés en figure 2, 6, 7 et 10, le pied 22 présente une section radiale sensiblement en S. Il est à noter que la courbure de la section en S varie en fonction des modes de réalisation. Cette géométrie permet avantageusement au pied 22 de s'adapter précisément à la géométrie du moyeu 4.

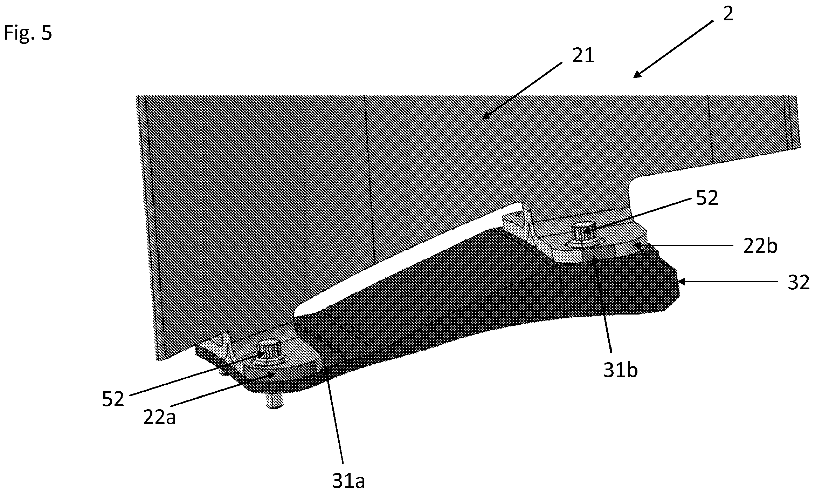

Selon le mode de réalisation présenté en figure 5, l'aube 2 peut présenter un pied 22 en deux parties distinctes, une première partie correspondant à la portion d'attaque 22a et une deuxième partie correspondant à la portion de fuite 22b, et en particulier un pied 22 réduit à deux zones de fixation.

Tel que cela sera détaillé ci-après, le pied 22 est adapté pour être vissé à une platine 3 et/ou au moyeu 4. Tel que cela sera détaillé, ci-après, la totalité du pied 22 ou seule une portion peut être fixée à la platine 3.

Selon les modes de réalisation présentés aux figures 1, 2, 6 et 7, l'aube 2 présente une plateforme 23 positionnée entre le pied 22 et la pale 21. La plateforme 23 présente une section radiale conique ayant une fonction de déflecteur (i.e. de guide) pour le flux d'air. Alternativement, la plateforme 23 peut être rapportée à une pale 21 existante.

L'aube 2 est réalisée en matériau composite. Il est précisé que par matériau composite, il est entendu un matériau comprenant une résine dans laquelle sont noyées des fibres. La résine peut par exemple être un polymère et les fibres peuvent par exemple être des fibres de carbone, de verre.

### Platine

D'une manière avantageuse, la platine 3 est un organe de centrage et de fixation adapté pour être interposé entre le moyeu 4 et le pied 22. La platine 3 peut être réalisée en métal et mise en forme par forgeage. Selon les modes de réalisation, des nervures internes peuvent éventuellement renforcer la structure mécanique de la platine.

D'une manière générale, quel que soit le mode de réalisation, la platine 3 présente au moins une surface longitudinale 31 adaptée pour être fixée en sous face d'un pied 22 et une surface radiale 32 adaptée pour être fixée au moyeu 4, par exemple par une portée conique. D'une manière générale, commune à l'ensemble des modes de réalisation présentés ci-après, la fixation de la surface longitudinale 31 en sous face du pied 22 est réalisée par des vis radiale 52. De plus, la fixation de la surface radiale 32 au moyeu 4 est réalisée par des vis longitudinales 51a. En d'autres termes, la platine 3 cumule deux fonctions distinctes réparties sur deux surfaces distinctes de la platine. D'une part, la fixation longitudinale au moyeu 4 via la surface longitudinale 31, et d'autre part la fixation radiale au pied 22 via la surface radiale 32.

Selon un premier mode de réalisation présenté en figure 1, la platine 3 présente une section radiale sensiblement en forme de L. Selon ce mode de réalisation, la platine 3 est adaptée pour recevoir entièrement le pied 22.

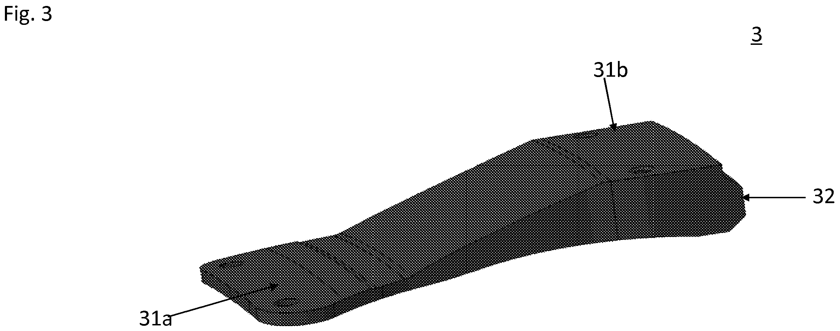

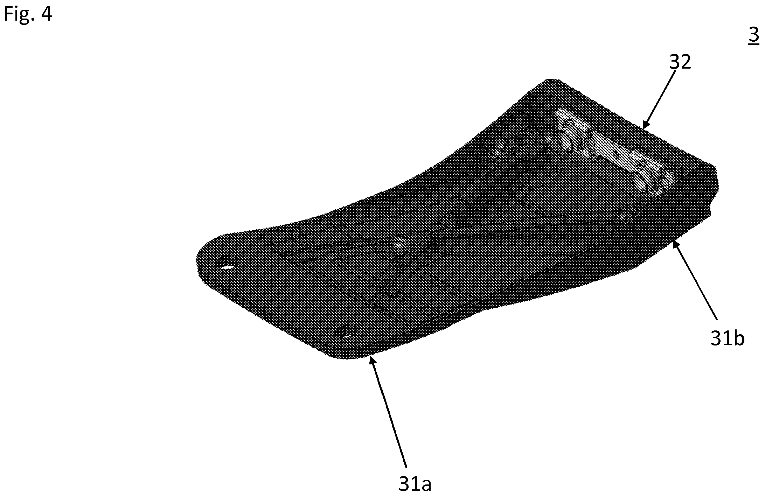

Selon les modes de réalisation présentés aux figures 2 à 5, la platine 3 présente une section radiale sensiblement en forme de S. Selon ces modes de réalisation, la platine 3 est adaptée pour recevoir entièrement le pied 22, qu'il soit en une ou en deux parties.

Selon ces modes de réalisation, la platine 3 présente une première surface longitudinale 31a adaptée pour être fixée en sous face d'une portion d'attaque d'un pied 22, et une deuxième surface longitudinale 31b adaptée pour être positionnée en sous face d'une portion de fuite d'un pied 22. La section radiale sensiblement en forme de S est telle que la première surface longitudinale 31a et la deuxième surface longitudinale 31b sont dans des plans parallèles distincts.

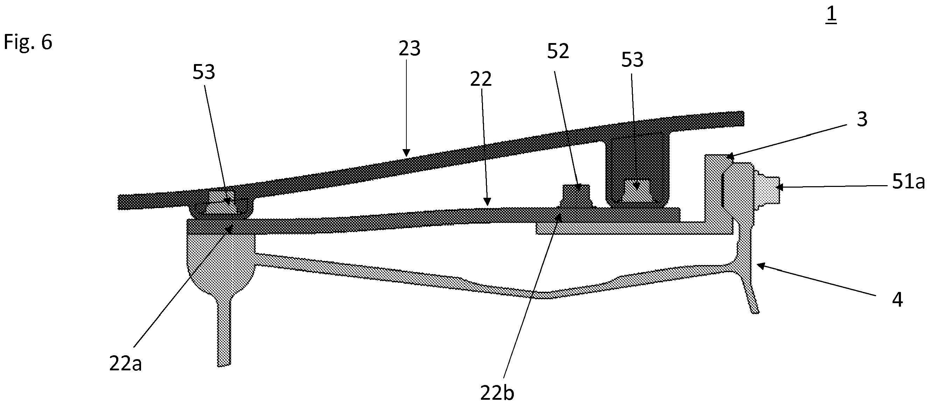

Selon un mode de réalisation présenté en figure 6, la platine 3 présente une section radiale sensiblement en L. Selon ce mode de réalisation, la platine 3 est adaptée pour être positionnée uniquement en sous face d'une portion de fuite 22b du pied 22.

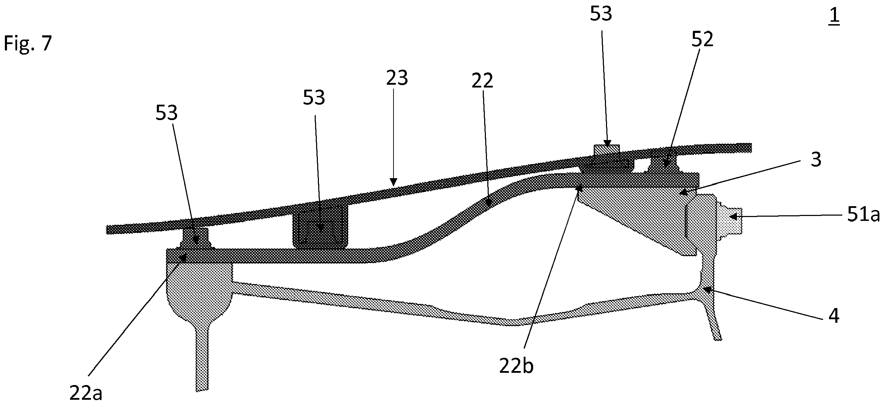

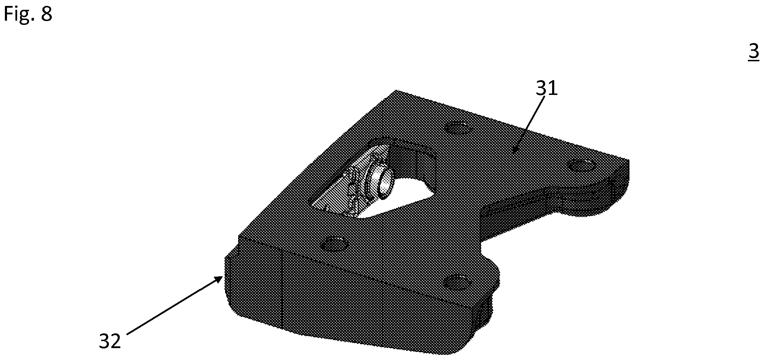

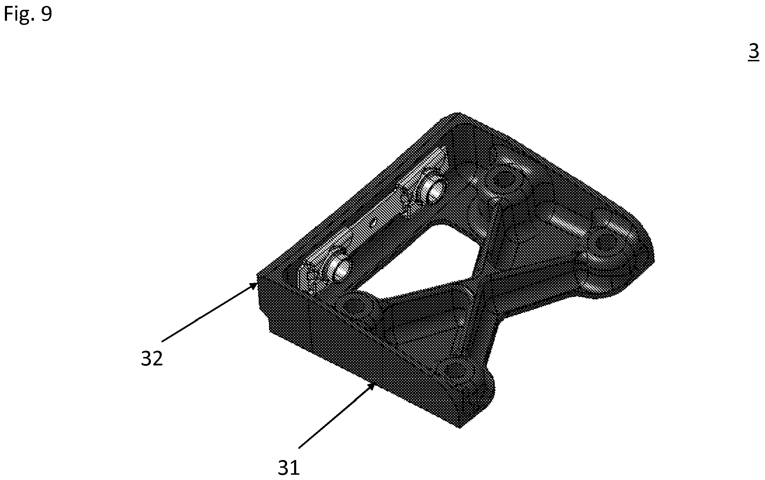

Selon un mode de réalisation présenté aux figures 7 à 10, la platine 3 présente une section radiale sensiblement en forme de triangle Selon ce mode de réalisation, la platine 3 est adaptée pour être positionnée uniquement en sous face d'une portion de fuite 22b du pied 22.

### Assemblage selon le premier mode de réalisation

Selon le premier mode de réalisation, comme expliqué précédemment, le pied 22 est entièrement fixé à la platine 3. En d'autres termes, selon ce mode de réalisation, le pied 22 est fixé au moyeu 4 uniquement via la platine 3.

D'une manière particulièrement avantageuse, le pied 22 est fixé par des vis 52 radiales traversant la surface longitudinale 31. Cette disposition particulièrement avantageuse est commune à tous les modes de réalisation, et permet une fixation simple du pied 22 à la platine 3, tout en garantissant le juste positionnement du pied 22. En outre, cette disposition permet avantageusement la transmission des efforts mécanique du moyeu 4 vers la pale 21, de sorte que les efforts ne sont pas concentrés dans la platine 3.

Selon le premier mode de réalisation, il est remarquable qu'une portion d'attaque de la plateforme 23 peut être fixée avec la platine 3. De même, une portion de fuite de la plateforme 23 peut être en fixée avec la platine 3. Cette disposition peut permettre de créer une zone étanche au flux d'air entre la plateforme 23 et la platine 3, de sorte à ne pas créer de perturbations dans le flux d'air.

Ensuite, la platine 3 est fixée au moyeu 4 par des vis 51a longitudinales, positionnées dans la surface radiale 32, ainsi que par des vis 51b radiales.

### Assemblage selon le deuxième mode de réalisation

L'assemblage selon le deuxième mode de réalisation est identique à celui présenté pour le premier, nonobstant les différences de géométries des sections radiale du pied 22 et de la platine 3. Comme on peut le voir sur la figure 2, ce mode de réalisation est adapté pour la fixation d'une aube 2 dont le pied 22 présente une section radiale en S.

Néanmoins, il est remarquable que selon le deuxième mode de réalisation, la plateforme 23 est fixée au pied 22 (et non pas à la platine 3).

Selon une variante, présentée en figure 5, le pied 22 peut être scindée en deux parties. Cette disposition permet d'avoir un pied 22 dont la géométrie est simplifiée au maximum et dont la masse est réduite au maximum. Ainsi, cette disposition permet avantageusement de simplifier le procédé de fabrication du pied et donc d'en réduire les coûts de fabrication. De plus, la réduction de masse permet très avantageusement de réduire la consommation énergétique de la turbomachine.

Ces deux parties sont toutes les deux fixées à la platine 3.

### Assemblage selon les troisième et quatrième modes de réalisation

Selon ces modes de réalisation, représentés aux figures 6 à 10, la platine 3 est fixée uniquement à une portion de fuite 22b du pied 22 et la portion d'attaque 22a du pied 22 est fixée directement au moyeu 4 par des vis radiales 53.

Selon ces modes de réalisation la plateforme 23 est vissée au pied 22. Selon une disposition particulière représentée en figure 6, une même vis 53 peut relier la plateforme 23, la portion d'attaque 22a du pied 22 et le moyeu 4.

D'une manière particulièrement avantageuse, quel que soit le mode de réalisation, l'ensemble des fixations peut être réalisé par des vis. En d'autres termes, l'ensemble 1 selon l'invention ne comprend pas de liaisons mécanique complexes telles que des queues-d'aronde.

Il est remarquable que selon ces modes de réalisation, la platine 3 est de dimensions réduites et suffisantes pour assurer le juste positionnement de l'aube 2. En d'autres termes, selon ces modes de réalisation, la fixation de la portion d'attaque 22a du pied 22 sert uniquement de fixation et n'a pas de fonction de positionnement. Il est à noter que les faibles dimensions de la platine 3 permettent une réduction de la masse et une simplification de la fabrication. De même que pour le pied 22 présenté en figure 5, la réduction de la masse permet de diminuer la consommation énergétique de la turbomachine. On pourrait d'ailleurs envisager de combiner le pied de la figure 5 avec la platine 3 des figures 7 à 10.

### Turbomachine

Selon un autre aspect l'invention porte sur une turbomachine comprenant un ensemble 1 de redresseur de flux pour un module de soufflante comprenant au moins une aube 2 présentant une pale 21 et un pied destiné à être fixé à un moyeu 4 de la turbomachine, et une platine 3 de l'aube 2 sur la turbomachine fixé d'une part au moyeu 4 à une position azimutale déterminée et d'autre part au pied 22 d'aube 2.

### Procédé d'assemblage

Selon un troisième aspect, l'invention concerne un procédé d'assemblage d'un ensemble 1 de redresseur de flux pour un module de soufflante à un moyeu 4 d'une turbomachine comprenant les étapes suivantes :
- fixation, d'au moins une platine 3 à une aube 2 de redresseur de flux,
- fixation, sur le moyeu 4, de la platine 3 fixée à l'aube 2, à une position azimutale déterminée.

Ce procédé d'assemblage est particulièrement avantageux dans la mesure où la platine 3 préalablement fixée à l'aube 2 permet de garantir le juste positionnement de l'aube 2 sur le moyeu 4. Ainsi, il est possible de s'affranchir de liaisons mécaniques complexes et peu viables.

## Revendications

1. Ensemble (1) de redresseur de flux pour un module de soufflante d'une turbomachine, l'ensemble (1) de redresseur comprenant une pluralité d'aubes (2) réparties autour d'un axe de révolution de l'ensemble de redresseur, chaque aube (2) est en matériau composite et présente une pale (21) et un pied (22) destiné à être assemblé à un moyeu (4) de la turbomachine, l'ensemble (1) comprenant une platine (3) de centrage et de fixation sur la turbomachine destinée à être fixée d'une part au moyeu (4) à une position azimutale déterminée et d'autre part au pied (22) de l'une des aubes (2), la platine (3) étant adaptée pour être vissée au moyeu (4) par des vis s'étendant longitudinalement (51a) par rapport à l'axe de révolution de l'ensemble (1), l'ensemble étant **caractérisé en ce que** la platine est adaptée pour être vissée au pied (22) par des vis (52) s'étendant radialement par rapport à l'axe de révolution de l'ensemble (1).

2. Ensemble (1) de redresseur selon la revendication 1 dans lequel la platine (3) présente une section radiale choisie parmi une forme sensiblement en L, ou en S, ou triangulaire.

3. Ensemble (1) de redresseur selon l'une quelconque des revendications 1 ou 2 dans lequel le pied (22) est fixé au moyeu (4) uniquement via la platine (3).

4. Ensemble (1) de redresseur selon l'une quelconque des revendications 1 ou 2 dans lequel l'aube (2) présente une portion d'attaque et une portion de fuite, la portion d'attaque (22a) du pied (22) étant fixé directement au moyeu (4) et la portion de fuite (22b) du pied (22) étant fixée au moyeu (4) via la platine (3).

5. Ensemble (1) de redresseur selon l'une quelconque des revendications précédentes, dans lequel la platine (3) est en métal.

6. Ensemble (1) de redresseur selon l'une quelconque des revendications précédentes, dans lequel, une plateforme (23) est positionnée entre le pied (22) et la pale (21), la plateforme (23) présentant une section radiale conique ayant une fonction de déflecteur d'un flux d'air.

7. Ensemble (1) de redresseur selon la revendication 6, dans lequel la plateforme (23) est monobloc avec la pale (21).

8. Ensemble (1) de redresseur selon la revendication 6, dans lequel la plateforme (23) est un élément distinct de la pale (21), fixé à la pale (21).

9. Turbomachine comprenant un ensemble (1) de redresseur de flux selon l'une quelconque des revendications 1 à 8, pour un module de soufflante comprenant au moins une aube (2) présentant une pale (21) et un pied (22) fixé à un moyeu (4) de la turbomachine, et un organe de centrage et de fixation (3) de l'aube (2) sur la turbomachine fixé d'une part au moyeu (4) à une position azimutale déterminée et d'autre part au pied (22) d'aube (2).

10. Procédé d'assemblage d'un ensemble (1) de redresseur de flux selon l'une quelconque des revendications 1 à 8, d'un module de soufflante à un moyeu (4) d'une turbomachine comprenant les étapes suivantes :
- fixation, d'une platine (3) à une aube (2) de redresseur de flux,
- fixation, sur le moyeu (4), de la platine (3) fixée à une aube (2), à une position azimutale déterminée.

## Patentansprüche

1. Leitschaufelanordnung (1) für ein Gebläsemodul einer Turbomaschine, wobei die Leitschaufelanordnung (1) eine Vielzahl von Schaufeln (2) umfasst, die um eine Umlaufachse der Leitschaufelanordnung verteilt sind, wobei jede Schaufel (2) aus Verbundmaterial besteht und ein Schaufelblatt (21) und einen Fuß (22) umfasst, der dazu bestimmt ist, mit einer Nabe (4) der Turbomaschine zusammengebaut zu werden, wobei die Anordnung (1) eine Platte (3) zur Zentrierung und zur Befestigung an der Turbomaschine umfasst, die dazu bestimmt ist, einerseits an der Nabe (4) an einer bestimmten azimutalen Position und andererseits an dem Fuß (22) von einer der Schaufeln (2) befestigt zu sein, wobei die Platte (3) angepasst ist, um an die Nabe (4) durch Schrauben geschraubt zu sein, die sich längs (51a) in Bezug auf die Umlaufachse der Anordnung (1) erstrecken, wobei die Anordnung **dadurch gekennzeichnet ist, dass** die Platte angepasst ist, um an den Fuß (22) durch Schrauben (52) verschraubt zu werden, die sich radial in Bezug auf die Umlaufachse der Anordnung (1) erstrecken.

2. Leitschaufelanordnung (1) nach Anspruch 1, wobei die Platte (3) einen radialen Querschnitt aufweist, der aus einer im Wesentlichen L- oder S- oder dreieckigen Form ausgewählt ist.

3. Leitschaufelanordnung (1) nach einem der Ansprüche 1 oder 2, wobei der Fuß (22) an der Nabe (4) einzig über die Platte (3) befestigt ist.

4. Leitschaufelanordnung (1) nach einem der Ansprüche 1 oder 2, wobei die Schaufel (2) einen Vorderabschnitt und einen Hinterabschnitt aufweist, wobei der Vorderabschnitt (22a) des Fußes (22) direkt an der Nabe (4) befestigt ist und der Hinterabschnitt (22b) des Fußes (22) an der Nabe (4) über die Platte (3) befestigt ist.

5. Leitschaufelanordnung (1) nach einem der vorhergehenden Ansprüche, wobei die Platte (3) aus Metall ist.

6. Leitschaufelanordnung (1) nach einem der vorhergehenden Ansprüche, wobei eine Plattform (23) zwischen dem Fuß (22) und dem Schaufelblatt (21) positioniert ist, wobei die Plattform (23) einen konischen radialen Querschnitt aufweist, der eine Funktion eines Deflektors für eine Luftströmung aufweist.

7. Leitschaufelanordnung (1) nach Anspruch 6, wobei die Plattform (23) einteilig mit dem Schaufelblatt (21) ist.

8. Leitschaufelanordnung (1) nach Anspruch 6, wobei die Plattform (23) ein von dem Schaufelblatt (21) getrenntes Element ist, das an dem Schaufelblatt (21) befestigt ist.

9. Turbomaschine, die eine Leitschaufelanordnung (1) nach einem der Ansprüche 1 bis 8 für ein Gebläsemodul umfasst, die mindestens eine Schaufel (2), die ein Schaufelblatt (21) und einen Fuß (22) umfasst, der an einer Nabe (4) der Turbomaschine befestigt ist, und ein Organ zur Zentrierung und zur Befestigung (3) der Schaufel (2) an der Turbomaschine umfasst, das einerseits an der Nabe (4) an einer bestimmten azimutalen Position und andererseits am Fuß (22) der Schaufel (2) befestigt ist.

10. Verfahren zum Zusammenbauen einer Leitschaufelanordnung (1) nach einem der Ansprüche 1 bis 8 eines Gebläsemoduls an einer Nabe (4) einer Turbomaschine, das die folgenden Schritte umfasst:
- Befestigen einer Platte (3) an einer Schaufel (2) der Leitschaufel,
- Befestigen der an einer Schaufel (2) befestigten Platte (3) an der Nabe (4) an einer bestimmten azimutalen Position.

## Claims

1. Flow straightener assembly (1) for a fan module of a turbomachine, the straightener assembly (1) comprising a plurality of blades (2) distributed around an axis of revolution of the straightener assembly, each blade (2) being made of a composite material and having a vane (21) and a root (22) intended to be assembled to a hub (4) of the turbomachine, the assembly (1) comprising a plate (3) for centring and fixing to the turbomachine intended to be fixed on the one hand to the hub (4) at a given azimuthal position and on the other hand to the root (22) of one of the blades (2), the plate (3) being adapted to be screwed to the hub (4) by screws extending longitudinally (51a) with respect to the axis of revolution of the assembly (1), the assembly being **characterized in that** the plate is adapted to be screwed to the root (22) by screws (52) extending radially with respect to the axis of revolution of the assembly (1).

2. The rectifier assembly (1) of claim 1 wherein the plate (3) has a radial crosssection selected from a substantially L, or S, or triangular shape.

3. The rectifier assembly (1) according to any one of claims 1 or 2 wherein the root (22) is attached to the hub (4) only via the plate (3).

4. A rectifier assembly (1) according to any one of claims 1 or 2 wherein the blade (2) has a leading portion and a trailing portion, the leading portion (22a) of the toot (22) being attached directly to the hub (4) and the trailing portion (22b) of the root (22) being attached to the hub (4) via the plate (3).

5. A rectifier assembly (1) according to any of the preceding claims, wherein the plate (3) is made of metal.

6. A rectifier assembly (1) according to any of the preceding claims, wherein, a platform (23) is positioned between the root (22) and the vane (21), the platform (23) having a conical radial section having a function of deflecting an air flow.

7. The rectifier assembly (1) of claim 6, wherein the platform (23) is integral with the vane (21).

8. The rectifier assembly (1) of claim 6, wherein the platform (23) is a separate component from the vane (21), attached to the vane (21).

9. Turbomachine comprising a flow straightener assembly (1) according to any one of claims 1 to 8, for a fan module comprising at least one blade (2) having a vane (21) and a root (22) fixed to a hub (4) of the turbomachine, and a member (3) for centring and fixing the blade (2) to the turbomachine fixed on the one hand to the hub (4) at a determined azimuthal position and on the other hand to the root (22) of the blade (2).

10. A method of assembling a flow straightener assembly (1) according to any one of claims 1 to 8 from a fan module to a hub (4) of a turbomachine comprising the following steps:
- attachment of a plate (3) to a flow straightener blade (2),
- fixing, on the hub (4), of the plate (3) fixed to a blade (2), at a determined azimuthal position.
